# EUROPEAN PATENT SPECIFICATION

(11) **EP 3 828 734 B1**
(45) Date of publication and mention of the grant of the patent: **11.03.2026**
(21) Application number: 19211789.3
(22) Date of filing: 27.11.2019
(51) Int. Cl.: G06F 16/58, G06N 3/08, G06N 3/0464, G06N 3/09

(54) **METHOD OF PERFORMING A DATA COLLECTION PROCEDURE FOR A PROCESS WHICH USES ARTIFICIAL INTELLIGENCE**
VERFAHREN ZUR DURCHFÜHRUNG EINES DATENSAMMLUNGSVERFAHRENS FÜR EINEN PROZESS, DER KÜNSTLICHE INTELLIGENZ VERWENDET
PROCÉDÉ D'EXÉCUTION D'UNE PROCÉDURE DE COLLECTE DE DONNÉES POUR UN PROCESSUS UTILISANT L'INTELLIGENCE ARTIFICIELLE

(43) Date of publication of application: 02.06.2021
(73) Proprietor: TeamViewer Germany GmbH, 73033 Göppingen (DE)
(72) Inventor: Witt, Hendrik, 28279 Bremen (DE); Yassin, Amjad, 28195 Bremen (DE); Gruhlke, Oliver, 28219 Bremen (DE); Li, Zhuli, 28327 Bremen (DE)
(74) Representative: Schmitt-Nilson Schraud Waibel Wohlfrom Patentanwälte Partnerschaft mbB

(56) References cited:
- EP-A1- 2 915 319
- WO-A1-2013/003957
- WO-A1-2018/213205
- US-A1- 2011 307 542
- US-A1- 2014 181 089
- US-A1- 2017 017 903
- US-A1- 2018 314 738

## Description

The present invention relates to a method of performing a data collection procedure for generating a dataset for input to a process which uses artificial intelligence, and to a computer program product comprising software code sections which are adapted to perform such method.

Generally, so-called Artificial Intelligence (Al) is often used as a term which encompasses various forms of algorithms which are also known as Machine Learning or Deep Learning. It may involve various algorithms that can automatically learn from experience. Typically, such algorithms are built on mathematics and statistics that can be employed to predict events, classify entities, diagnose problems, and model function approximations, just to name some examples.

Artificial Intelligence is, among other, useful for validating actions in complex processes. For example, objects, environments, actions, gestures and other general features (such as visual, numerical, acoustical, etc.) can be detected by using sensors and then interpreted by using Al. The results of this interpretation are then, for example, used to ensure quality, safety and a high productivity in complex processes.

To make use of, for example, Al assisted interpretation, it is useful to have it during the early stages of creating these processes, and especially in the modeling stage. Nowadays, there are multiple process modeling tools in the market, which can be used by technically untrained or unexperienced users with no special technical expertise. However, using existing Al solutions, and especially integrating the results into existing processes, typically require domain knowledge and expert skills. Nontechnical users with no special knowledge are normally not able to use and/or integrate Al solutions into the processes when necessary. Issues start with a lack of guidelines on, e.g., which data to collect, how to interpret any results and how to improve the results. Moreover, such tools with Al capabilities do not provide a solution to directly deploy results in the required context, therefore, the users must rely on additional tools or acquire additional knowledge to use them. That is why Al-capable process modeling tools are mostly implemented by experts having expertise in Al.

Typically, Al methods often require a large amount of data to produce meaningful results. A common problem associated with such methods in some use cases is attaining the data. Even though there is a considerable amount of data being generated daily, it cannot be used easily with Al methods. The generated data may be either not relevant, not collected properly, or not stored correctly which, when used with Al methods, will produce bad results. There are many tools available today which facilitate the collection of data that meets part of the criteria of Al methods. However, the collected data require post-processing to some degree to fulfil the rest of the criteria. Some of these tools may even require the knowledge or the use of other tools for the post-processing.

US 9 443 153 B1 discloses a yield determination system for automatically collecting, determining, and labeling yield behaviors of vehicles during cooperative driving scenarios. The system includes sensors for detecting the start and stop of the scenario, a data recorder for automatically collecting the data, an annotation unit for automatically labeling features of interest about the vehicle and surrounding vehicles during the scenario. The labeled file may be automatically uploaded and processed to insert the labelled features into a learning model to predict vehicle behavior in cooperative driving scenarios.

US 2010/0076923 A1 refers to an online multi-label active annotation which may include building a preliminary classifier from a pre-labeled training set included with an initial batch of annotated data samples, and selecting a first batch of sample-label pairs from the initial batch of annotated data samples. The sample-label pairs may be selected by using a sample-label pair selection module. The first batch of sample-label pairs may be provided to online participants to manually annotate the first batch of sample-label pairs based on the preliminary classifier. The preliminary classifier may be updated to form a first updated classifier based on an outcome of the providing the first batch of sample-label pairs to the online participants.

WO 2018/213205 A1 discloses systems and methods for rapidly building, managing, and sharing machine learning models. Managing the lifecycle of machine learning models can include: receiving a set of unannotated data; requesting annotations of samples of the unannotated data to produce an annotated set of data; building a machine learning model based on the annotated set of data; deploying the machine learning model to a client system, wherein production annotations are generated; collecting the generated production annotations and generating a new machine learning model incorporating the production annotations; and selecting one of the machine learning model built based on the annotated set of data or the new machine learning model.

US 2018/314738 A1 discloses a system for tagging and integrating event data into operational data with the aid of a digital computer, in which a note comprising data about an event from a user is received. One or more of the tags are assigned to the note based on the user and the data. One or more of the tags is received from the user and the note is tagged with the received tags. Operational data comprising workflow data of an objective nature is defined. The note is integrated into the workflow data using the received tags, the assigned tags, and the categories of the received tags and the assigned tags. The workflow data with the integrated note is displayed on a display.

US 2014/181089 A1 discloses a computer-implemented method of associating digital tags with digital files comprises storing a plurality of digital files having embedded therein content data and metadata including tags.

It would therefore be beneficial to provide a method of performing a data collection procedure for generating a dataset for input to a process which uses artificial intelligence and involves an image processing process which also enables non-AI-expert users to use, improve or even create precise Al based applications or components with reduced time resources.

The invention relates to a method of performing a data collection procedure for generating a dataset for input to a process which uses artificial intelligence, and to a computer program product for performing such method according to the appended claims.

According to aspects of the invention, advantageously, the collection of data may be improved and performed more efficiently for use with Al processes with the help of a workflow designed for a specific task. The data collected may be correctly stored, labelled and directly relevant to the current task. In addition, the approach according to the invention can learn objects' preferences and properties to further facilitate the generation of data.

For an object detection Al method or process, the data used in such processes typically comprise images of objects of interest and a location of these objects in the images. The location is marked with a visual structure, which has, for example, a frame-like form like a bounding box surrounding one or more objects in the image. Such data may be used to later on identify same or similar objects in images by associating the objects with similar visual structures, e.g. bounding boxes, blended in in the images. The data collection for such methods may be completed over two or more steps. A first step may be to collect the images containing the objects. A second step may be to draw the visual structures, e.g. bounding boxes around each object in the images. Since such type of work normally requires relatively high precision, especially for the second step, it is usually done by hand. This may lead to large drain of human and time resources, which advantageously can be reduced with a method according to the invention.

The approach according to the invention may streamline a collection of data for, e.g., an object detection task with the help of a workflow designed for the specific task. Any images collected with the workflow may contain visual structure information, such as bounding boxes information, which can then be used for any Al process. In addition, this approach can learn objects' preference and properties to further facilitate the generation of data. Particularly, the approach can also learn environmental conditions of a project within which the Al process is performed, in addition to the context or properties of an object (like shape).

According to an embodiment of the invention, the at least one process which uses artificial intelligence receives signals from at least one sensor and one or more sensor-driven components and implements an artificial intelligence model for processing signals received from the at least one sensor and sensor-driven component. For example, the at least one sensor may be one or more cameras for capturing images and/or video streams of a real environment, and the sensor-driven component may be a processor or other processing unit for controlling the sensor reading, e.g. image/video capturing process, and transfer to a computer device or network. In such embodiment, the artificial intelligence model may be employed in a computer vision process in which the image and/or video streams are processed. Other sensors, such as for capturing or measuring physical parameters, like temperature, load, electrical voltage, or light, or IMU (inertial measurement unit) sensors, etc., and corresponding sensor-driven components for processing and/or transmitting such sampled physical parameters may also be employed individually, or in any combination with each other, in connection with the present invention. Further, any sensors or sensor types commonly used with, or integrated in, mobile devices or wearable devices can also be employed in connection with the invention, for example one or more audio sensors or IMU sensors.

According to the invention, defining a context of the data collection procedure and generating corresponding context information comprises using a graphical user interface for inquiring user input regarding context for collecting data for the objects of interest.

According to an embodiment, when executing the data collection workflow, if data to be collected in a step requiring user input is not valid or available, the data collection workflow provides an option to skip that step. For example, a step could be skipped when a user is not able to create the requested context or object (i.e., data to be collected is not available). According to another embodiment, for example in response to an output signal of an audio sensor while collecting the data, an automatic validation may also be employed in a manner like "the context requires a silent environment - please skip" (i.e., data to be collected is not valid).

According to an embodiment, when executing the data collection workflow, at least some of the user inputs and/or context information are observed and used by the workflow engine to update the generated dataset at a particular stage of the workflow and/or used to update a current data collection step and/or used to present a warning information to the user in case of any difference to a defined objective of the data collection procedure.

According to a further embodiment, after executing the data collection workflow, a summary information of user inputs during the workflow is provided. According to an embodiment, the summary information may be used for generating, by the workflow engine, a new data collection workflow or for generating a subsequent modified execution of the data collection workflow.

The workflow engine, when executing the data collection workflow, presents at least one visual structure on the graphical user interface applicable as a label for associating with at least one object of interest displayed in at least one image capturing the at least one object of interest. The data collection workflow requests user input for positioning the at least one visual structure in relation to the at least one object of interest in the at least one image, wherein information regarding position of the at least one visual structure is used by the workflow engine as label information indicative of a position of the at least one object of interest in relation to the at least one image.

For example, the information regarding at least one of the position, a size and a number of the at least one visual structure is used to calibrate the generation of the at least one visual structure itself.

According to an embodiment, the at least one visual structure has a frame-like form designed for placing the at least one object of interest, or at least part thereof, within the frame-like form by user input. For example, the frame-like form may be designed in a form of a bounding box having a box-like form, such as rectangular or square form. Other geometric forms are also possible, like elliptic or circular shape.

According to an embodiment, the workflow engine, when executing the data collection workflow, requests user input such that, when the user starts executing the data collection workflow, the workflow engine presents information relevant to the data to be collected on the graphical user interface.

The workflow engine, when executing the data collection workflow, displays on the graphical user interface a view of a camera for
capturing the at least one image and presents in the view of the camera at least one visual structure in set locations and sizes, wherein the workflow engine requests user input for fitting one or more of the at least one object of interest displayed in the view of the camera within at least one of the visual structures, and wherein once the at least one object of interest is fitted inside the at least one of the visual structures, the workflow engine requests user input for capturing the at least one image, and saves the captured at least one image and the data associated with the at least one of the visual structures.

Aspects of the invention and embodiments will now be described with reference to the following Figures in which:
- Fig. 1: depicts a schematic workflow diagram illustrating a method of performing a data collection procedure according to an embodiment of the invention,
- Fig. 2: depicts a flow diagram illustrating a method of performing a data collection procedure according to an embodiment of the invention,
- Fig. 3: depicts another workflow diagram illustrating a method of performing a data collection procedure according to an embodiment of the invention applied to the embodiment of image processing and
- Fig. 4A, B: blending in visual structures, here bounding boxes, to be associated with respective objects of interest in an image, show respective schematic illustrations of a graphical user interface (GUI) in a workflow with exemplary images depicting an object of interest, here a hammer, and presenting or blending in a visual structure, here a bounding box, on the graphical user interface which is applicable as a label for associating with an object of interest,
- Fig. 5: shows a schematic illustration of an example of a dataset overview interface (e.g. page on a display screen) provided to the user which depicts information of the collected data, where the user can for example double check any images and correct the labels if there are any wrong ones.

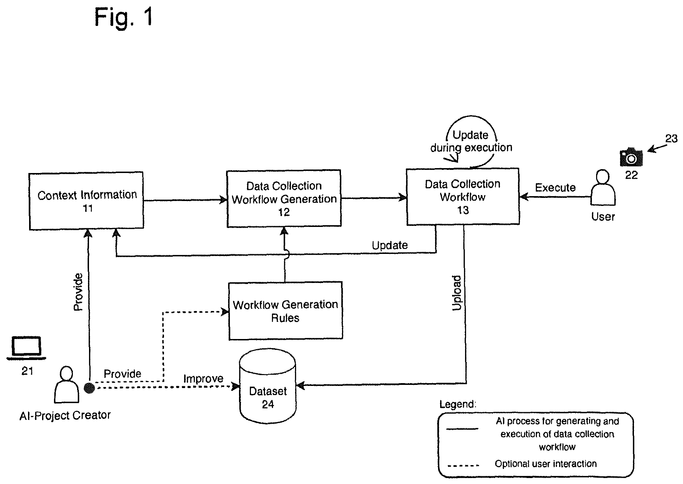

Figs. 1, 2 and 3 each show a respective schematic workflow diagram illustrating a method of performing a data collection procedure for generating a dataset for input to a process which uses artificial intelligence according to embodiments of the invention.

In a potential scenario, a user uses a computing device 21, which may be in principle any commonly available computing device, e.g. a personal computer, tablet computer, wearable or mobile computing device, a server computer, etc., which runs a workflow engine according to embodiments of the invention as described herein. The user may also employ one or more sensors for measuring or capturing one or more physical parameters, such as one or more cameras 22 for capturing images of a real environment, or any other type of sensor, and a sensor-driven component 23 (not explicitly shown), such as a processing device or other electronic component communicating with the sensor(s) for processing the measured parameters. For example, the sensor-driven component 23 is configured to communicate with the computing device 21 and sensor(s)in wired manner or wirelessly. For example, the sensor-driven component 23 may be implemented in the one or more sensors, e.g., may be a processing device implemented in the sensor, for example a camera processor implemented in the camera. The computing device 21 may be on site or remote (e.g., at a different location) from the sensor(s), in this embodiment from the at least one camera 22. It may be coupled with the sensor(s) and/or sensor-driven component in wired manner or wirelessly, for instance through the Internet. For example, a server computer can be used, which can be a local machine or a so-called cloud server. Analogously, one or more sensors (e.g. cameras or IMU sensors) can be used which can be remote or assembled on the client device, like a mobile phone.

The following embodiments describe aspects of the invention mainly with respect to using a camera for capturing images of a real environment. However, the invention may also be applied in connection with other sensors, like an IMU sensor integrated in a wearable device, applied individually or in combination with, e.g., a camera, and corresponding sensor data.

The computing device 21, which may comprise one or more microprocessors as commonly used in data processing devices like server computers or personal computers, receives the captured parameters from the one or more sensors, here images from the camera(s) 22. For example, the computing device 21 may be a wearable device and may include one or more microprocessors as a sensor-driven component 23 and the one or more cameras 22.

In a potential implementation, the computing device 21 and/or sensor-driven component 23 may be implemented in software and/or hardware, in discrete or distributed manner, in any appropriate processing device, such as in one or more microprocessors of a local device, e.g. of a mobile or wearable computer system, and/or of one or more server computers.

Generally, the user runs on the computing device 21 an application, such as a computer vision application or image processing process, which is configured to perform at least one process which uses an artificial intelligence model for processing signals and defining at least one parameter set for performing the at least one process. For example, the application is a computer vision application which performs an image or object recognition process on images of a real environment captured by the camera 22 and which uses an artificial intelligence model for processing signals related to or derived from the images and for defining at least one parameter set used in an image processing algorithm having a machine learning architecture. For example, the algorithm is configured according to one or more sets of parameters provided from a multi layer neural network as commonly known in connection with machine learning architectures.

Artificial Intelligence (AI) is used herein as a term which also implies Machine Learning, Computer Vision, Deep Learning, etc. It is used as a term which describes all the different forms of algorithms which are based on machine learning. This could be Image Classification, Object Detection, or other ways of interpreting sensor, task and/or process data.

An Al model is understood as being a model ready to be used by an Al algorithm.

Context or context information is used herein as a collection of information which is indicative of the situation, use case, environment and/or intention associated with the Al process in order to create the correct machine learning based solution.

Data refers to one or more of objects, environments, actions, gestures and other general features (visual, numerical, acoustical, etc.) which can be detected by using one or more sensors of various types.

Labeled data refers to data which has a configuration such that it can be used for generating AI based processes (also called modules when implemented in an overall process) or components of such processes. Particularly, labeled data comprises data and a label which describes machine readable information about the data, e.g. used for training a machine learning solution. Typically, labeled data comprises data captured by one or more sensors and a description (label) of the captured data, e.g. so called ground truth, in a format which can be further processed by a machine.

Object detection is a process of detecting one or more objects in one or more images or a video (stream of images). A form of object detection is done by labelling objects with a respective frame-like structure (e.g. a bounding box) and, for example, an object name in the image or the video.

The term workflow describes a formal representation of a process which can be understood by software, so that the user can be guided through the process or it could be executed automatically.

With increasing use of Al in embedded/wearable devices for several applications, the invention can be applied, for example, in a self-learning method for the generation of bounding box labelled data. Particularly an object detection task should specify some information, such as coordinates of where objects are positioned in an image. This may be represented with a visual structure, such as a frame-like structure in the form of a bounding box, surrounding such respective object in an image. There may be various tools to generate such bounding box labelled data. The usage of such tools may be divided into two steps. In a first step, the user collects images and stores them either online (e.g., on a server computer, also called "cloud") or locally (e.g., a client computer). In a second step, the objects of interest in the images are labelled with bounding boxes manually, which is quite time-consuming. Hence, the generation of a bounding box labelled data is monotonous and an uneconomical task. The aim of a method according to aspects of the invention is to allow the user to create bounding box labels for each image after finishing the guided process. For example, an image may be labeled instantly when its captured (i.e., labeling as soon as a datum is collected). In another option, the image may be labeled when the data collection is finished. Both options, and any further potential options, are possible. The user does not need to store image data into either cloud or computer to label them. However, it is still possible for the user to upload images to a server computer and label the images manually.

The computing device 21 runs a user-driven workflow engine which performs a data collection workflow. Generally, the workflow engine, when executing the data collection workflow, requests user input and guides the user through a user-driven data collection procedure of collecting labeled data, as set out in more detail below, and creates a dataset of labeled data as a basis for the process which uses artificial intelligence, such as a computer vision process.

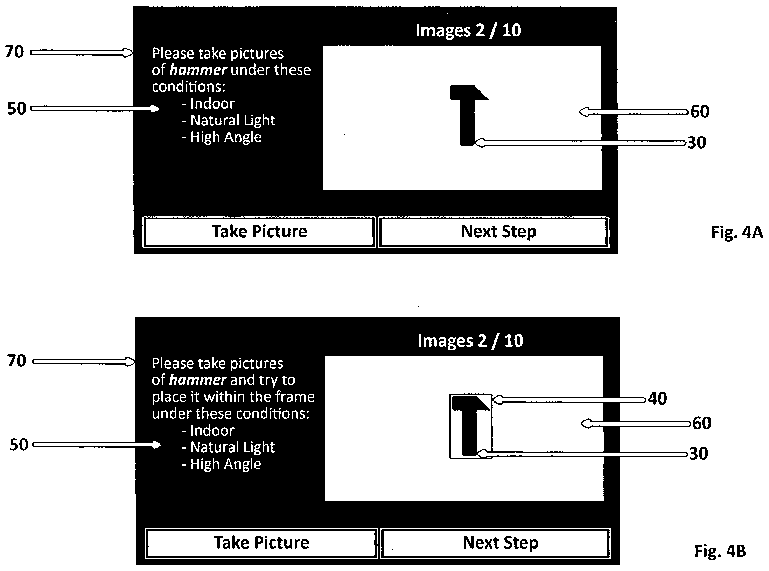

Before referring in more detail to the workflow diagrams according to Figs. 1, 2, and 3, a potential application example is described in more detail with reference to Figs. 4A and 4B, which may facilitate the understanding of the processes described with respect to Figs. 1, 2, and 3. In this regard, as an illustrating example for describing embodiments of the user-driven workflow engine and data collection workflow, Figs. 4A and 4B show a respective schematic illustration of a graphical user interface (GUI) of embodiments of a workflow which may be applied in the field of computer vision or image processing, with exemplary images 60 depicting an object of interest 30, here a hammer, to be recognized by an Al process and presenting a visual structure 40, here a bounding box, on the graphical user interface 50. The respective illustration shows an example view in the workflow during data collection step execution. As set out in more detail below, the user is requested to fit the object of interest 30 (here: a hammer) inside the visual structure 40 while taking the mentioned information on the left side of the graphical user interface 50 into account.

The workflow engine, when executing the data collection workflow, presents one or more visual structures 40 (Fig. 4B) on the graphical user interface 50 which may be applied as a respective label for associating with a respective object of interest 30 displayed in an image 60 which captures the at least one object of interest 30. The workflow engine receives user input for positioning the visual structure 40 in relation to the object of interest 30 in the image 60. For example, the image 60 represents a field of view of the camera 22 which may be repositioned by user input in relation to the object of interest 30, i.e. when the user moves the camera 22, such that in the present example the hammer 30 is positioned within the bounding box 40. That is, by moving the camera 22 and its field of view, the bounding box 40 (which may be fixed in relation to the window of the field of view) is moved until the hammer 30, which appears in the field of view, is positioned inside the box 40. The bounding box 40 does not have to be fixed, but could also move in the field of view (e.g. for collecting data for video processing or tracking). The information regarding position of the visual structure 40 in relation to the object of interest 30 can then be used by the workflow engine as label information indicative of a position of the object of interest 30 in relation to the image 60, and/or also as a label information indicating a kind or type of object (here: working tool or hammer).

Such process, as described herein with respect to the hammer as an object of interest 30, can be repeated analogously multiple times with similar or different visual structures 40 in relation to further objects of interest (e.g., of different size) in the same image 60 or in subsequent images which depict, for example, a different part of the real environment.

For example, the workflow engine, when executing the data collection workflow, requests user input and, when the user starts executing the data collection workflow, the workflow engine presents information relevant to the data to be collected on a graphical user interface, such as the graphical user interface 50 as shown in Fig. 4A or 4B. For example, information 70 may be presented which is relevant to the data to be collected in order for the data collection procedure to work properly and to produce a meaningful dataset, as explained in more detail below.

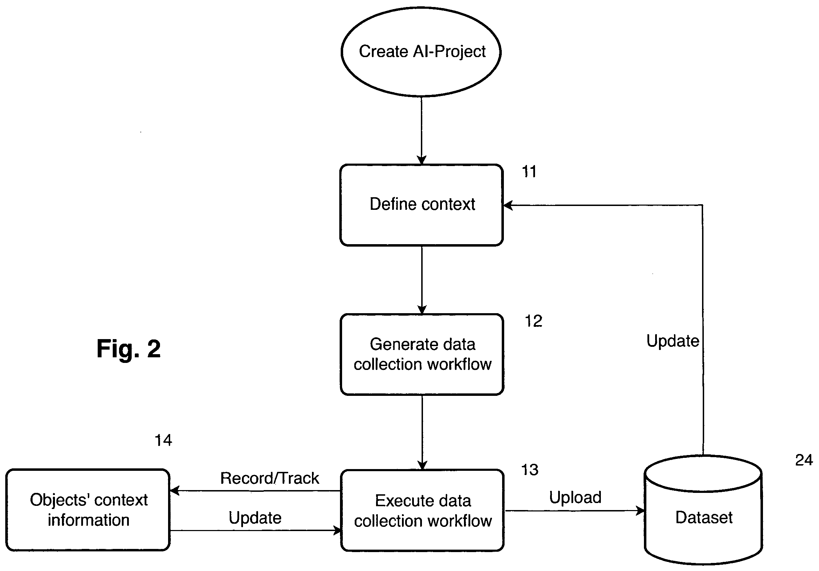

Now referring to the workflow illustrated in Fig. 1, the data collection procedure generally comprises the following instances, modules or sub-processes according to an embodiment of the invention. In connection therewith, Fig. 2 shows a respective flow diagram of performing a data collection procedure according to an embodiment:
For example, the procedure may start with creating a project by an Al-Project-Creator (who may be the user who will execute the workflow, or a different person). A project may be defined as specifying an initial concept to start from, and holds context and/or object information.

In a first instance 11, a context of the data collection procedure is defined. For example, this may comprise inferring context of the data collection procedure automatically from sensor data received from at least one sensor. In a second instance 12, after defining the context of the data collection procedure, the data collection workflow is generated . In an embodiment, as depicted in Fig. 1, this may optionally comprise a user interaction for providing one or more workflow generation rules, e.g. how many steps are created under which conditions, what do the users have to do or enter in each step, how the result is stored, etc..

In a third instance 13, the workflow engine executes the data collection workflow and provides information relevant to the data to be collected on a graphical user interface. For example, as shown in Fig. 4A, the graphical user interface provides information under which circumstances and conditions (e.g. light, perspective, real environment, etc.) one or more pictures shall be captured by the camera 22. In Fig. 4B, information is shown instructing the user to place an object of interest 30 (here: hammer) within a frame-like structure 40, here a bounding box, under these conditions. The context information, the provided information relevant to the data to be collected (e.g. frame-like structure in relation to the object of interest), and the received user input during the data collection workflow is used by the workflow engine for labelling the data to be collected and generating the dataset to be used by an Al process. The dataset may be stored, e.g., on a server computer 24.

The invention is described herein according to an exemplary embodiment which comprises a collection of images with bounding box data for certain objects which appear in these images. It will be appreciated by the skilled person that embodiments of the invention may also be applied in connection with other processes and use scenarios, and that the following description of embodiments may not be understood as limiting the invention in this respect. The method can be a stand-alone workflow or can be part of another workflow and it will simplify the process of collecting data for an object detection task. Moreover, it may be self-improving by learning from the user's actions during or after the execution of the workflow.

According to the embodiment as described herein, the described workflow can be viewed in three states: (1) Pre-execution, (2) during execution, and (3) post-execution.

### (1) Pre-execution:

In order to improve or create the Al model and to keep the quality of the data as high as possible, the context is defined in a first step. This could be done, for example, by using a wizard, which uses a graphical user interface to ask for the needed user input regarding the context step by step. Also inferring the context automatically by using for example sensor data or any other kind of data is possible. These two approaches could also be combined to a semi-automatic method. With a defined context, the system may automatically generate a data collection workflow, which can be executed by an unlimited number of other users.

Generally, to generate a dataset which likely meets criteria of an employed Al method, it is beneficial to have a well-defined objective. This can be achieved by having a well-defined use case and context information. The same applies for collection of bounding boxes data. This sort of information, however, is usually lacking in many of the publicly available datasets or tools that are used for data collection. The proposed method according to the invention takes the objective into consideration (whether explicitly or implicitly) and helps to produce bounding boxes data that meets this objective. It will also guide the user on how and what kind of data he or she should collect.

### (2) During execution:

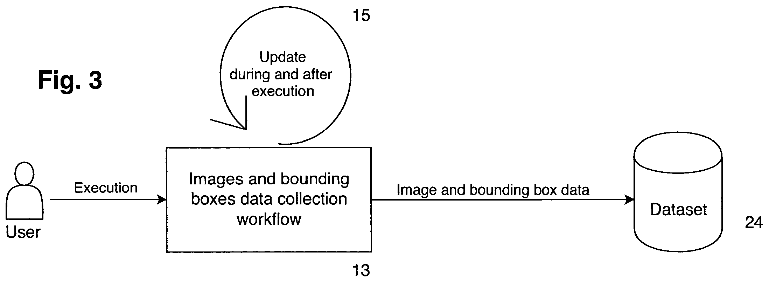

Generally, in this instance, context information, instructions given to the user, and user actions are used to correctly label and store the data. During the execution, certain user actions and/or context information related to an object may be observed, tracked and/or recorded and used to update the data generated at a certain step (cf. step 14 in Fig. 2). It is also used to update a current collection step or warn the user in case of any difference to the defined objective. As illustrated in Fig. 3, such update 15 may be performed during and/or after execution of the data collection workflow.

When the user first executes the workflow, he or she is presented with information relevant to the data to be collected. For example, what are the objects of interest and what is the context for collecting images with bounding boxes for these objects, such as lighting, perspective, environmental conditions. See for example the information 70 provided in Fig. 3A, 3B on the left hand side. Afterwards, and at each step, the user can collect images with his or her device. The main difference here is that in a particular region of the camera view displayed on the computing device 21 or camera 22, multiple bounding boxes can be displayed in various locations and sizes. The user should then try to fit one or more objects 30 (introduced earlier in the workflow) in a respective one of these boxes 40 (see, e.g. Fig. 3B). This may involve moving the camera 22 and camera view until the object 30 fits into the respective box 40 displayed at a particular position in the camera view. Once the user fits the objects inside the boxes by moving the camera, the user can take a picture, and the workflow is configured to save the image as well as the bounding boxes data, for example, at the time of taking the image. If the user is not able to collect the data during the process, he or she can skip that step or request new bounding boxes to be drawn. As the procedure repeats, more data of images and bounding boxes is generated, until a sufficient dataset is produced. If the collecting procedure is completed correctly, the dataset will also meet the objective and easier integrate with Al processes.

According to an embodiment, the generation of the bounding boxes' locations and size is done in a semi-random fashion at the beginning. This allows for greater variety in the final dataset and helps in producing meaningful results later. At each or at least some of the steps during the execution, information indicative of the saved boxes may be used to calibrate the generation of the bounding boxes themselves. For example, bounding boxes for certain objects will appear at a certain location only or with a certain size. This simplifies the collection process and makes it more user-friendly.

### (3) Post execution:

After executing the workflow for data collection, e.g. image and bounding box data collection, a summary of the user's actions (and the bounding boxes information, if any) is stored, e.g. on the remote server computer 24. This information can then be used when generating a new workflow for the same objective or for the next execution of the workflow. This is useful for generalising the workflow, but still meeting the same objective that was defined earlier. It is also useful for the case in which the workflow is being executed by multiple users.

Within the module 11 for defining the context, the following exemplary options may be presented to the user, for example presented in respective GUIs in a workflow subsequently, which may be used to generate a more meaningful dataset:
- Enter information regarding environment, e.g. where the object shall be recognized: For example, indoor or outdoor.
- Enter information regarding light condition, e.g. at which type of light the objects shall be recognized: Natural light or artificial light, or under which light condition the objects shall be recognized: Bright light or dimmed light.
- Enter information regarding perspective of the camera's field of view (e.g., "bird's eye angle, eye level, or worm's eye angle").
- Enter information regarding noise level, e.g. quiet or noisy.

Such kind of options or information may be presented on a graphical user interface wherein the user selects one of such options by common means, such as a mouse or by touching a respective button displayed on the GUI.

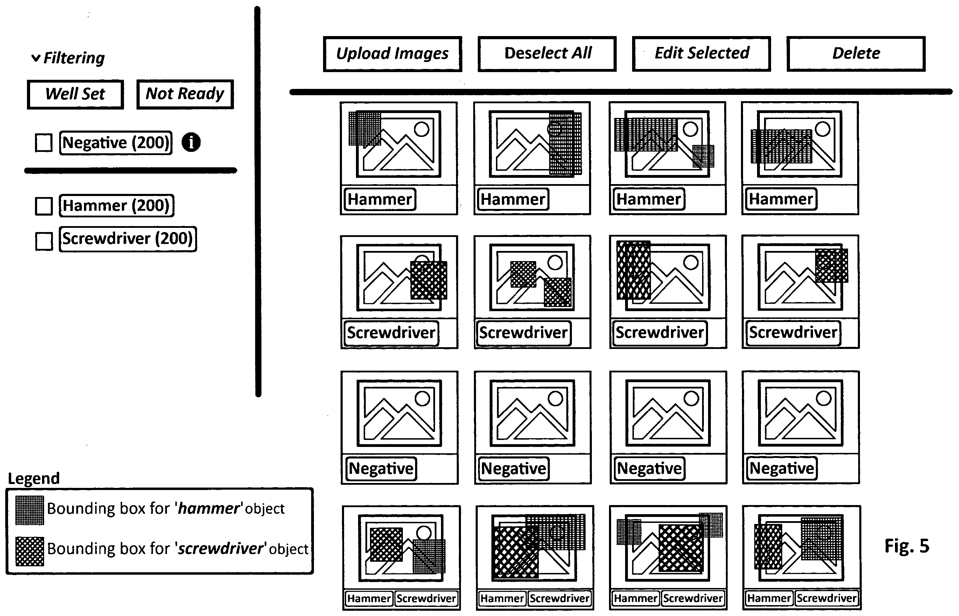

Fig. 5 shows a schematic illustration of an example of a dataset overview interface (e.g. page) provided to the user which depicts information for evaluating results and working against weaknesses. In the dataset overview page, the user observes, for example, that the overall performance of the Al model is quite good, but it has issues detecting the object of interest correctly (for example, correctly distinguishing between hammer and screwdriver). In particular, Fig. 5 shows a schematic illustration according to which the user can double check any collected images. The user can improve the labels if there were some mistakes while executing data collection. Further, the user may get a statistical overview about the current dataset (e.g., how many examples for each object were collected). The user may then decide whether he or she should upload more data and label it by himself or herself.

In the following, a further embodiment of a potential use case is described. In this example, the user would like to make a guide for assembling a shelf. First, the user should define a clear objective. For the shelf assembly task, the user must ensure that whoever assembles the shelf has the right equipment and completes the task indoors in a well-lit area. The equipment needed will be a hammer and a screwdriver. The user provides this information to be used in the data collection workflow. The resulting workflow comprises in this case six steps for collecting images with bounding box of the hammer, screwdriver, and the four pieces of the shelf. In the first step, the user is requested to collect images of the hammer in the specified context (indoor, well-lit area) while placing it within the bounding box that appears on screen. At the beginning, the bounding boxes will have semi-random size and location. If the user takes a picture, the information of the displayed bounding box is saved. If the user skips the current bounding box, similar boxes will be undesirable. As this process continues, user preferred bounding boxes will appear more and more during the current step. Once the user finishes executing all steps, the data (images and corresponding bounding boxes) is saved and can be exported. For example, an image may be labeled instantly when its captured (i.e., labeling as soon as a datum is collected). In another option, the image may be labeled when the data collection workflow is finished. Both options, and any further potential options, are possible. When the next user executes the same workflow, the saved information is used to generate better-fitting boxes instead of relying on semi-randomness.

In another exemplary use case the user would like to recognize different machines in his factory by the sound they emit while running. For example, there are three different machines to be recognized in a quite loud environment and from different distances. The user provides the names of the respective machine and relevant context information. When the data collection workflow is executed the user will see a similar GUI as in Fig. 4A, with the exception that, as the described use case has no camera involved, the camera preview 60 and the hammer 30 is not presented to the user. Instead there is either an indicator whether the device is currently recording or preparation information for the next record interval. Further information may be a request to do some noise (e.g. talk loudly or turn the back to the machine). The general information 50 on the left will show the user general information about what to record (which machine) and general context information. After each recording interval the audio data will be labeled with the name of the machine and the context information of the respective step.

In some processes using Al, for example in image processing, but also in connection with other processes, e.g. involving other type of sensors, information in a dataset to be used should cover multiple different conditions, like lighting, angle or different types of versions, which should be generated. To achieve this, an embodiment of the invention uses a component which collects the information which is relevant for the process. This information can come from different sources:
1. Explicit context information: Information which is relevant for the whole process or specifically added by a user during the workflow creation. This could be, for example, the kind of technology which should be used and which parameters it will be using. Also, extensions or restrictions based on a country or company are possible. The base information may be stored on the server computer while other information can be entered by the user.
2. Implicit context information: Based on sensor data and/or information which can be inferred from the workflow, for example in which step AI is going to be used.
3. Generation Rules: Defined rules which are used to generate the workflow. These rules may contain details which are needed to successfully generate the workflow. For example, how many steps are created under which conditions, what do the users have to do or enter in each step, how the result is stored, etc. The rules do not have a limit regarding the complexity and they also can require user input, can be completely automatic or semi-automatic.

With using this information, a workflow for improving the Al model accuracy can be generated. In a potential embodiment, this could be done using a so called "wizard" which asks a user for input to generate the context.

## Claims

1. A method of performing a data collection procedure for generating a dataset for input to a process which uses an algorithm which is based on machine learning, the method comprising:
- running, by a computing device (21), a workflow engine which is configured to perform a data collection workflow, wherein the workflow engine, when executing the data collection workflow, requests user input and guides the user through a user-driven data collection procedure of collecting labeled data and creates a dataset of labeled data as a basis for the process which uses an algorithm which is based on machine learning, wherein the process is an image processing process and the data to be collected are one or more objects of interest (30) to be processed in the image processing process,
- defining a context of the data collection procedure which comprises using a graphical user interface for inquiring user input regarding context for collecting data for the objects of interest, and generating corresponding context information (11),
- after defining the context of the data collection procedure, executing the data collection workflow (12, 13) which requests user input as to which are the objects of interest (30) and requesting user input such that, when the user starts executing the data collection workflow, the workflow engine presents information relevant to the data to be collected on a graphical user interface, and
- using the context information, the provided information relevant to the data to be collected, and the received user input during the data collection workflow (13) by the workflow engine for labelling the data to be collected and generating the dataset,
- wherein the workflow engine, when executing the data collection workflow (13), presents at least one visual structure (40) on the graphical user interface applicable as a label for associating with at least one object of interest (30) displayed in at least one image capturing the at least one object of interest (30), and the data collection workflow (13) requests user input for positioning the at least one visual structure (40) in relation to the at least one object of interest (30) in the at least one image, wherein information regarding position of the at least one visual structure (40) is used by the workflow engine as label information indicative of a position of the at least one object of interest (30) in relation to the at least one image, and
- the workflow engine, when executing the data collection workflow (13), displays on the graphical user interface a view of a camera (22) for capturing the at least one image and presents in the view of the camera at least one visual structure (40) in one or more set locations and sizes, wherein the workflow engine requests user input for fitting one or more of the at least one object of interest (30) displayed in the view of the camera (22) within at least one of the visual structures (40), and wherein once the at least one object of interest (30) is fitted inside the at least one of the visual structures (40), the workflow engine requests user input for capturing the at least one image, and saves the captured at least one image and the data associated with the at least one of the visual structures (40).

2. The method according to claim 1, wherein the process which uses an algorithm which is based on machine learning uses at least one sensor (22) and sensor-driven component (23) and implements an artificial intelligence model for processing signals received from the at least one sensor (22) and sensor-driven component (23).

3. The method according to one of claims 1 to 2, wherein when executing the data collection workflow (13), if data to be collected in a step requiring user input is not valid or available, the data collection workflow provides an option to skip that step.

4. The method according to one of claims 1 to 3, wherein when executing the data collection workflow (13), at least some of the user inputs and/or context information are observed and used by the workflow engine to update the generated dataset at a particular stage of the workflow and/or used to update a current data collection step.

5. The method according to one of claims 1 to 4, wherein after executing the data collection workflow (13), a summary information of user inputs during the workflow is provided.

6. The method according to claim 5, wherein the summary information is used for generating, by the workflow engine, a new data collection workflow or for generating a subsequent modified execution of the data collection workflow.

7. The method according to one of claims 1 to 6, wherein the information regarding at least one of the position, a size and a number of the at least one visual structure (40) is used to calibrate the generation of the at least one visual structure itself.

8. The method according to one of claims 1 to 7, wherein the at least one visual structure (40) has a frame-like form designed for placing the at least one object of interest (30), or at least part thereof, within the frame-like form by user input.

9. The method according to one of claims 1 to 8, wherein the workflow engine, when executing the data collection workflow (13), requests user input such that, when the user starts executing the data collection workflow, the workflow engine presents information relevant to the data to be collected on the graphical user interface.

10. A computer program product comprising software code sections which are adapted to perform a method according to one of the preceding claims when loaded into an internal memory of a computing device.

## Patentansprüche

1. Verfahren zum Durchführen eines Datensammlungsvorgangs zum Erzeugen eines Datensatzes zur Eingabe in einen Prozess, der einen auf maschinellem Lernen basierenden Algorithmus verwendet, wobei das Verfahren aufweist:
- Ausführen, durch eine Rechenvorrichtung (21), einer Workflow-Engine, die dazu ausgelegt ist, einen Datensammlungsworkflow durchzuführen, wobei die Workflow-Engine bei der Ausführung des Datensammlungsworkflows eine Benutzereingabe anfordert und den Benutzer durch einen benutzergesteuerten Datensammlungsvorgang zum Sammeln von gekennzeichneten Daten führt und einen Datensatz aus gekennzeichneten Daten als Grundlage für den Prozess erstellt, der einen auf maschinellem Lernen basierenden Algorithmus verwendet, wobei der Prozess ein Bildverarbeitungsprozess ist und die zu sammelnden Daten eines oder mehrere Objekte (30) von Interesse sind, die in dem Bildverarbeitungsprozess zu verarbeiten sind,
- Definieren eines Kontexts des Datensammlungsvorgangs, der die Verwendung einer grafischen Benutzeroberfläche zum Abfragen einer Benutzereingabe bezüglich des Kontexts für das Sammeln von Daten für die Objekte von Interesse und das Erzeugen entsprechender Kontextinformationen (11) aufweist,
- nach dem Definieren des Kontexts des Datensammlungsvorgangs das Ausführen des Datensammlungsworkflows (12, 13), der eine Benutzereingabe dahingehend anfordert, welche die Objekte (30) von Interesse sind, und das Anfordern der Benutzereingabe, sodass, wenn der Benutzer mit der Ausführung des Datensammlungsworkflows beginnt, die Workflow-Engine Informationen, die für die zu sammelnden Daten relevant sind, auf einer grafischen Benutzeroberfläche darstellt, und
- Verwenden der Kontextinformationen, der bereitgestellten Informationen, die für die zu sammelnden Daten relevant sind, und der während des Datensammlungsworkflows (13) von der Workflow-Engine empfangenen Benutzereingabe, um die zu sammelnden Daten zu kennzeichnen und den Datensatz zu erzeugen,
- wobei die Workflow-Engine bei der Ausführung des Datensammlungsworkflows (13) mindestens eine visuelle Struktur (40) auf der grafischen Benutzeroberfläche darstellt, die als Kennzeichnung zur Zuordnung zu mindestens einem Objekt (30) von Interesse verwendet werden kann, das in mindestens einem Bild angezeigt wird, das das mindestens eine Objekt (30) von Interesse erfasst, und der Datensammlungsworkflow (13) eine Benutzereingabe zum Positionieren der mindestens einen visuellen Struktur (40) in Bezug auf das mindestens eine Objekt (30) von Interesse in dem mindestens einen Bild anfordert, wobei Informationen bezüglich der Position der mindestens einen visuellen Struktur (40) von der Workflow-Engine als Kennzeichnungsinformationen verwendet werden, die eine Position des mindestens einen Objekts (30) von Interesse in Bezug auf das mindestens eine Bild angeben, und
- wobei die Workflow-Engine bei der Ausführung des Datensammlungsworkflows (13) auf der grafischen Benutzeroberfläche eine Ansicht einer Kamera (22) zum Erfassen des mindestens einen Bildes anzeigt und in der Ansicht der Kamera mindestens eine visuelle Struktur (40) an einer oder mehreren eingestellten Stellen und Größen darstellt, wobei die Workflow-Engine eine Benutzereingabe zum Einpassen eines oder mehrerer des mindestens einen Objekts (30) von Interesse, das in der Ansicht der Kamera (22) angezeigt wird, in mindestens eine der visuellen Strukturen (40) anfordert und wobei die Workflow-Engine, sobald das mindestens eine Objekt (30) von Interesse in die mindestens eine der visuellen Strukturen (40) eingepasst ist, eine Benutzereingabe zum Erfassen des mindestens einen Bildes anfordert und das erfasste mindestens eine Bild und die der mindestens einen der visuellen Strukturen (40) zugeordneten Daten speichert.

2. Verfahren nach Anspruch 1, wobei der Prozess, der einen auf maschinellem Lernen basierenden Algorithmus verwendet, mindestens einen Sensor (22) und eine sensorgesteuerte Komponente (23) verwendet und ein Modell für künstliche Intelligenz zur Verarbeitung von Signalen implementiert, die von dem mindestens einen Sensor (22) und der sensorgesteuerten Komponente (23) empfangen werden.

3. Verfahren nach einem der Ansprüche 1 bis 2, wobei bei der Ausführung des Datensammlungsworkflows (13), wenn Daten, die in einem Schritt gesammelt werden sollen, der eine Benutzereingabe erfordert, nicht gültig oder verfügbar sind, der Datensammlungsworkflow eine Option zum Überspringen dieses Schritts bereitstellt.

4. Verfahren nach einem der Ansprüche 1 bis 3, wobei bei der Ausführung des Datensammlungsworkflows (13) mindestens einige der Benutzereingaben und/oder Kontextinformationen von der Workflow-Engine beobachtet und verwendet werden, um den erzeugten Datensatz in einer speziellen Phase des Workflows zu aktualisieren und/oder um einen aktuellen Datensammlungsschritt zu aktualisieren.

5. Verfahren nach einem der Ansprüche 1 bis 4, wobei nach der Ausführung des Datensammlungsworkflows (13) zusammenfassende Informationen der Benutzereingabe während des Workflows bereitgestellt werden.

6. Verfahren nach Anspruch 5, wobei die zusammenfassenden Informationen von der Workflow-Engine zum Erzeugen eines neuen Datensammlungsworkflows oder zum Erzeugen einer nachfolgenden modifizierten Ausführung des Datensammlungsworkflows verwendet werden.

7. Verfahren nach einem der Ansprüche 1 bis 6, wobei die Informationen bezüglich mindestens einer von der Position, einer Größe und einer Anzahl der mindestens einen visuellen Struktur (40) verwendet werden, um die Erzeugung der mindestens einen visuellen Struktur selbst zu kalibrieren.

8. Verfahren nach einem der Ansprüche 1 bis 7, wobei die mindestens eine visuelle Struktur (40) eine rahmenartige Form aufweist, die dazu ausgelegt ist, das mindestens eine Objekt (30) von Interesse oder zumindest einen Teil davon durch eine Benutzereingabe in der rahmenartigen Form zu platzieren.

9. Verfahren nach einem der Ansprüche 1 bis 8, wobei die Workflow-Engine bei der Ausführung des Datensammlungsworkflows (13) eine Benutzereingabe anfordert, sodass die Workflow-Engine, wenn der Benutzer mit der Ausführung des Datensammlungsworkflows beginnt, Informationen, die für die zu sammelnden Daten relevant sind, auf der grafischen Benutzeroberfläche darstellt.

10. Computerprogrammprodukt, das Softwarecodeabschnitte aufweist, die dafür ausgebildet sind, ein Verfahren nach einem der vorhergehenden Ansprüche auszuführen, wenn sie in einen internen Speicher einer Computervorrichtung geladen werden.

## Revendications

1. Une méthode de réalisation d'une procédure de collecte de données pour générer un ensemble de données en entrée d'un processus utilisant un algorithme basé sur l'apprentissage automatique, la méthode comprenant :
- l'exécution, par un dispositif informatique (21), d'un moteur de flux de travail configuré pour réaliser un flux de travail de collecte de données, où le moteur de flux de travail, lorsqu'il exécute le flux de travail de collecte de données, demande une entrée utilisateur et guide l'utilisateur à travers une procédure de collecte de données pilotée par l'utilisateur pour collecter des données étiquetées et crée un ensemble de données étiquetées comme base pour le processus utilisant un algorithme basé sur l'apprentissage automatique, où le processus est un processus de traitement d'images et les données à collecter sont un ou plusieurs objets d'intérêt (30) à traiter dans le processus de traitement d'images,
- la définition d'un contexte de la procédure de collecte de données qui comprend l'utilisation d'une interface utilisateur graphique pour demander une entrée utilisateur concernant le contexte de la collecte des données pour les objets d'intérêt, et la génération des informations contextuelles correspondantes (11),
- après la définition du contexte de la procédure de collecte de données, l'exécution du flux de travail de collecte de données (12, 13) qui demande une entrée utilisateur concernant quels sont les objets d'intérêt (30) et demandant une entrée utilisateur de sorte que, lorsque l'utilisateur commence à exécuter le flux de travail de collecte de données, le moteur de flux de travail présente des informations pertinentes pour les données à collecter sur une interface utilisateur graphique, et
- l'utilisation des informations contextuelles, des informations fournies pertinentes pour les données à collecter et de l'entrée utilisateur reçue pendant le flux de travail de collecte de données (13) par le moteur de flux de travail pour étiqueter les données à collecter et générer l'ensemble de données,
- où le moteur de flux de travail, lors de l'exécution du flux de travail de collecte de données (13), présente au moins une structure visuelle (40) sur l'interface utilisateur graphique applicable comme étiquette pour l'association avec au moins un objet d'intérêt (30) affiché dans au moins une image capturant l'objet d'intérêt (30), et le flux de travail de collecte de données (13) demande une entrée utilisateur pour positionner la structure visuelle (40) par rapport à l'objet d'intérêt (30) dans l'image, où les informations concernant la position de la structure visuelle (40) sont utilisées par le moteur de flux de travail comme informations d'étiquette indiquant une position de l'objet d'intérêt (30) par rapport à l'image, et
- le moteur de flux de travail, lors de l'exécution du flux de travail de collecte de données (13), affiche sur l'interface utilisateur graphique une vue d'une caméra (22) pour capturer au moins un image et présente dans la vue de la caméra au moins une structure visuelle (40) dans une ou plusieurs positions et tailles prédéfinies, où le moteur de flux de travail demande une entrée utilisateur pour ajuster un ou plusieurs des objets d'intérêt (30) affichés dans la vue de la caméra (22) à l'intérieur d'au moins une des structures visuelles (40), et où une fois que l'objet d'intérêt (30) est ajusté à l'intérieur d'au moins une des structures visuelles (40), le moteur de flux de travail demande une entrée utilisateur pour capturer au moins une image et enregistre l'image capturée et les données associées à au moins une des structures visuelles (40).

2. La méthode selon la revendication 1, où le processus utilisant un algorithme basé sur l'apprentissage automatique utilise au moins un capteur (22) et un composant piloté par capteur (23) et implémente un modèle d'intelligence artificielle pour traiter les signaux reçus du capteur (22) et du composant piloté par capteur (23).

3. La méthode selon l'une des revendications 1 ou 2, où lors de l'exécution du flux de travail de collecte de données (13), si les données à collecter dans une étape nécessitant une entrée utilisateur ne sont pas valides ou disponibles, le flux de travail de collecte de données offre une option pour passer cette étape.

4. La méthode selon l'une des revendications 1 à 3, où lors de l'exécution du flux de travail de collecte de données (13), au moins certaines des entrées utilisateur et/ou des informations contextuelles sont observées et utilisées par le moteur de flux de travail pour mettre à jour l'ensemble de données généré à un stade particulier du flux de travail et/ou pour mettre à jour une étape actuelle de collecte de données.

5. La méthode selon l'une des revendications 1 à 4, où après l'exécution du flux de travail de collecte de données (13), un résumé des entrées utilisateur pendant le flux de travail est fourni.

6. La méthode selon la revendication 5, où les informations de résumé sont utilisées pour générer, par le moteur de flux de travail, un nouveau flux de travail de collecte de données ou pour générer une exécution modifiée ultérieure du flux de travail de collecte de données.

7. La méthode selon l'une des revendications 1 à 6, où les informations sur au moins une des positions, une taille et un nombre de la structure visuelle (40) sont utilisées pour calibrer la génération de la structure visuelle elle-même.

8. La méthode selon l'une des revendications 1 à 7, où au moins une structure visuelle (40) a une forme de cadre conçue pour positionner l'objet d'intérêt (30), ou au moins une partie de celui-ci, à l'intérieur de la forme de cadre par une entrée utilisateur.

9. La méthode selon l'une des revendications 1 à 8, où le moteur de flux de travail, lors de l'exécution du flux de travail de collecte de données (13), demande une entrée utilisateur de sorte que, lorsque l'utilisateur commence à exécuter le flux de travail de collecte de données, le moteur de flux de travail présente des informations pertinentes pour les données à collecter sur l'interface utilisateur graphique.

10. Un produit de programme informatique comprenant des sections de code logiciel qui sont adaptées pour réaliser une méthode selon l'une des revendications précédentes lorsqu'elles sont chargées dans une mémoire interne d'un dispositif informatique.
